(19) Europäisches Patentamt / European Patent Office / Office européen des brevets

(11) **EP 4 631 809 A1**

(12) **EUROPEAN PATENT APPLICATION**
published in accordance with Art. 153(4) EPC

(43) Date of publication:
**15.10.2025 Bulletin 2025/42**

(21) Application number: 24795528.9

(22) Date of filing: **05.02.2024**

(51) International Patent Classification (IPC):
**B60W 20/10** (2016.01)   **B60W 20/15** (2016.01)
**B60W 20/20** (2016.01)   **B60W 10/06** (2006.01)
**B60W 10/08** (2006.01)

(52) Cooperative Patent Classification (CPC):
Y02T 10/62

(86) International application number:
**PCT/CN2024/076051**

(87) International publication number:
**WO 2024/222139 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.04.2023  CN 202310487308**

(71) Applicant: **Chongqing Changan Automobile Co.,
Ltd.
Chongqing 400023 (CN)**

(72) Inventors:
• **LI, Mengna
  Chongqing 400023 (CN)**
• **YE, Minghui
  Chongqing 400023 (CN)**
• **LIU, Changpeng
  Chongqing 400023 (CN)**
• **WANG, Bozhou
  Chongqing 400023 (CN)**

(74) Representative: **Keller Schneider
Patent- und Markenanwälte AG
Eigerstrasse 2
Postfach
3000 Bern 14 (CH)**

(54) **TORQUE CONTROL METHOD AND APPARATUS FOR HYBRID POWER SYSTEM, VEHICLE, DEVICE, AND MEDIUM**

(57)    The present invention relates to a torque control method and apparatus for a hybrid power system, a vehicle, a device, and a medium. The method includes: when a driving mode of the hybrid power system is a series mode, determining a torque change slope range of an engine and a rotational-speed change slope range of a generator according to a driving demand power change determined by driving wheel end demand torque, and controlling torque of the engine and a rotational-speed of the generator to change according to corresponding change slope ranges that have been adjusted, so that actual torque of the engine and an actual rotational-speed of the generator change gently to respective targets thereof; and when the driving mode of the hybrid power system is a parallel mode, determining a torque change slope range of a driving motor according to a driving demand torque change determined by the driving wheel end demand torque, and controlling torque of the driving motor to change according to a corresponding change slope range that has been adjusted, so that actual torque of the driving motor changes gently to a target thereof.

FIG. 6

**Description**

TECHNICAL FIELD

The present invention is used for control over hybrid power systems, and in particular, to a torque control method and apparatus for a hybrid power system, a vehicle, a device, and a medium.

BACKGROUND

A series-parallel hybrid power system includes three power sources: an engine, a generator, and a driving motor, whose main hybrid power drive modes include a series mode and a parallel mode. In order to ensure that system efficiency is optimal and torque transferred to a wheel end meets a driving demand, the above three power sources are required to coordinate in different modes to output appropriate target torque or speed. In actual operation, a power source target based on an energy management strategy allocation may jump at adjacent moments when a driver demand remains unchanged, and a rapid change in the driver demand often causes a sudden change in the power source target. A too rapid change in the power source target may often affect the torque transferred to the wheel end, thereby worsening driving smoothness. For the above two scenarios where the power source target suddenly changes, different driver demands lead to different requirements for power and smoothness. When the driver demand changes little, the requirement for smoothness is higher. When the driver demand changes greatly, the requirement for power is high and the requirement for smoothness is low. Therefore, there is a need to develop a torque coordination control strategy to handle a steady-state power source target based on energy management allocation to ensure that actual torque transferred to the wheel end can take driving smoothness and power requirements into account.

SUMMARY

An objective of the present invention is to provide a torque control method and apparatus for a hybrid power system, a vehicle, a device, and a medium, which, based on series and parallel modes respectively, couple torque or power response speeds of power sources with a driver demand by design algorithms, and comprehensively consider differences between reality and targets of the power sources, to ultimately achieve a purpose that an entire vehicle can meet a driver's demands for driving smoothness and power in different driving modes and different driving demand scenarios.

In order to achieve the above objective, the present invention provides the following solutions.

The present invention provides a torque control method for a hybrid power system, including:

acquiring driving wheel end demand torque;

when a driving mode of the hybrid power system is a series mode, determining a torque change slope range of an engine and a rotational-speed change slope range of a generator according to a driving demand power change determined by the driving wheel end demand torque, and controlling torque of the engine and a rotational-speed of the generator to change according to corresponding change slope ranges that have been adjusted, so that actual torque of the engine and an actual rotational-speed of the generator change gently to respective targets thereof; and

when the driving mode of the hybrid power system is a parallel mode, determining a torque change slope range of a driving motor according to a driving demand torque change determined by the driving wheel end demand torque, and controlling torque of the driving motor to change according to a corresponding change slope range that has been adjusted, so that actual torque of the driving motor changes gently to a target thereof.

Preferably, when the driving mode of the hybrid power system is the parallel mode, the method further includes:

determining instant target torque of the driving motor; and
determining instant target torque of the engine according to the instant target torque of the driving motor and the driving wheel end demand torque so as to achieve gentle change control over the torque of the engine.

Preferably, when the driving mode of the hybrid power system is the parallel mode, the method further includes: when the actual torque of the engine is less than target torque of the engine that is determined based on the driving wheel end demand torque, compensating for a difference between the target torque of the engine and the actual torque of the engine by means of the generator.

Preferably, the step of determining a torque change slope range of an engine and a rotational-speed change slope range of a generator according to a driving demand power change determined by the driving wheel end demand torque includes:

determining driving demand power in a current period according to driving wheel end demand torque collected in the current period;

calculating a power difference between the driving demand power in the current period and driving demand power in a previous period;

obtaining a driving demand power change accumulated value in the current period based on the power difference and a driving demand power change accumulated value calculated in the previous period;

determining, according to the driving demand power change accumulated value in the current period, the torque change slope range of the engine and the rotational-speed change slope range of the generator based on the driving demand power change;

adding the torque change slope range of the engine based on the driving demand power change and a base torque change slope range of the engine in the series mode that is determined according to preset logic to obtain the torque change slope range of the engine that is demanded in the series mode; and

adding the rotational-speed change slope range of the generator based on the driving demand power change and a base rotational-speed change slope range of the generator in the series mode that is determined according to preset logic to obtain the rotational-speed change slope range of the generator that is demanded in the series mode.

Preferably, the determining, according to the driving demand power change accumulated value in the current period, the torque change slope range of the engine and the rotational-speed change slope range of the generator based on the driving demand power change includes:

determining, according to the driving demand power change accumulated value in the current period and the actual rotational-speed of the generator, a rotational-speed change accumulated value of the generator based on the driving demand power change;

determining the torque change slope range of the engine according to the rotational-speed change accumulated value of the generator;

determining, according to the driving demand power change accumulated value in the current period and the actual torque of the engine, a rotational-speed change accumulated value of the generator based on the driving demand power change; and

determining the rotational-speed change slope range of the generator according to the rotational-speed change accumulated value of the generator.

Preferably, the driving demand power change accumulated value includes a driving demand power positive change accumulated value and a driving demand power negative change accumulated value in different periods, and the step of obtaining a driving demand power change accumulated value in the current period based on the power difference and a driving demand power change accumulated value calculated in the previous period includes:

if the power difference is greater than 0, then

adding the driving demand power positive change accumulated value calculated in the previous period, the power difference, and a first preset attenuation factor with a negative value to obtain a driving demand power positive change original accumulated value, and taking a greater one selected from the driving demand power positive change original accumulated value and 0 to obtain a driving demand power positive change accumulated value in the current period; and

if the driving demand power negative change accumulated value calculated in the previous period is 0, determining a driving demand power negative change accumulated value in the current period to be 0; if the driving demand power negative change accumulated value calculated in the previous period is less than 0, adding the driving demand power negative change accumulated value calculated in the previous period and a second preset attenuation factor with a positive value to obtain a driving demand power negative change original accumulated value, and taking a smaller one selected from the driving demand power negative change original accumulated value and 0 to obtain the driving demand power negative change accumulated value in the current period; and

if the power difference is less than or equal to 0, then

adding the driving demand power negative change accumulated value calculated in the previous period, the power difference, and a third preset attenuation factor with a positive value to obtain the driving demand power negative change original accumulated value, and taking a smaller one selected from the driving demand power negative change original accumulated value and 0 to obtain the driving demand power negative change accumulated value in the current period; and

if the driving demand power positive change accumulated value calculated in the previous period is 0, determining the driving demand power positive change accumulated value in the current period to be 0; if the driving demand power positive change accumulated value calculated in the previous period is greater than 0, adding the driving demand power positive change accumulated value calculated in the previous period and a fourth preset attenuation factor with a negative value to obtain the driving demand power positive change original accumulated value, and taking a greater one selected from the driving demand power positive change original accumulated value and 0 to obtain the driving demand power positive change accumulated value in the current period.

Preferably, the step of determining a torque change slope range of a driving motor according to a driving demand torque change determined by the driving wheel end demand torque includes:

calculating a torque difference between driving wheel end demand torque in a current period and driving wheel end demand torque in a previous period;

obtaining a driving demand torque change accumulated value in the current period based on the torque difference and a driving demand torque change accumulated value calculated in the previous period;

determining, according to the driving demand torque change accumulated value in the current period and a speed ratio of driving motor to wheel end, the torque change slope range of the driving motor based on the driving demand torque change; and

adding the torque change slope range of the driving motor based on the driving demand torque change and a base torque change slope range of the driving motor in the parallel mode that is determined according to preset logic to obtain the torque change slope range of the driving motor that is demanded in the parallel mode.

Preferably, the step of obtaining a driving demand torque change accumulated value in the current period based on the torque difference and a driving demand torque change accumulated value calculated in the previous period includes:

if the torque difference is greater than 0, then

adding a driving demand torque positive change accumulated value calculated in the previous period, the torque difference, and a fifth preset attenuation factor with a negative value to obtain a driving demand torque positive change original accumulated value, and taking a greater one selected from the driving demand torque positive change original accumulated value and 0 to obtain a driving demand torque positive change accumulated value in the current period; and

if a driving demand torque negative change accumulated value calculated in the previous period is 0, determining a driving demand torque negative change accumulated value in the current period to be 0; if the driving demand torque negative change accumulated value calculated in the previous period is less than 0, adding the driving demand torque negative change accumulated value calculated in the previous period and a sixth preset attenuation factor with a positive value to obtain a driving demand torque negative change original accumulated value, and taking a smaller one selected from the driving demand torque negative change original accumulated value and 0 to obtain the driving demand torque negative change accumulated value in the current period; and

if the torque difference is less than or equal to 0, then

adding the driving demand torque negative change accumulated value calculated in the previous period, the torque difference, and a seventh preset attenuation factor with a positive value to obtain the driving demand torque negative change original accumulated value, and taking a smaller one selected from the driving demand torque negative change original accumulated value and 0 to obtain the driving demand torque negative change accumulated value in the current period; and

if the driving demand torque positive change accumulated value calculated in the previous period is 0, determining the driving demand torque positive change accumulated value in the current period to be 0; if the driving demand torque positive change accumulated value calculated in the previous period is greater than 0, adding the driving demand torque positive change accumulated value calculated in the previous period and an eighth preset attenuation factor with a negative value to obtain the driving demand torque positive change original accumulated value, and taking a greater one selected from the driving demand torque positive change original accumulated value and 0 to obtain the driving demand torque positive change accumulated value in the current period.

Preferably, the instant target torque of the engine is determined by the following formula:

$$T_{k|Eng\_Req} = \frac{T_{k|DrvReq} - T_{k|Mot\_Req} \cdot i_{Mot}}{i_{Eng}}$$

where $T_{k|Eng\_Req}$ denotes instant target torque of the engine at a time instance k, $T_{k|Mot\_Req}$ denotes instant target torque of the driving motor at the time instance k, $T_{k|DrvReq}$ denotes driving wheel end demand torque at the time instance k, $i_{Mot}$ denotes a speed ratio of driving motor to wheel end, and $i_{Eng}$ denotes a speed ratio of engine to wheel end.

Preferably, in the step of compensating for a difference between the target torque of the engine and the actual torque of the engine by means of the generator, instant target torque of the generator is determined by the following formula:

$$T_{k|Gen\_Req} = \frac{i_{Eng} \cdot \left( T_{k|Eng\_Req} - T_{k|Eng\_Act} \right)}{i_{Gen}}$$

where $T_{k|Gen\_Req}$ denotes instant target torque of the generator at a time instance k, $i_{Gen}$ denotes a speed ratio of generator to wheel end, $i_{Eng}$ denotes a speed ratio of engine to wheel end, $T_{k|Eng\_Act}$ denotes actual torque of the engine at the time instance k, and $T_{k|Eng\_Req}$ denotes instant target torque of the engine at the time instance k.

The present invention provides a torque control apparatus for a hybrid power system, including:

an acquisition module configured to acquire driving wheel end demand torque;
a first control module configured to, when a driving mode of the hybrid power system is a series mode, determine a torque change slope range of an engine and a rotational-speed change slope range of a generator according to a driving demand power change determined by the driving wheel end demand torque, and control torque of the engine and a rotational-speed of the generator to change according to corresponding change slope ranges that have been adjusted, so that actual torque of the engine and an actual rotational-speed of the generator change gently to respective targets thereof; and
a second control module configured to, when the driving mode of the hybrid power system is a parallel mode, determine a torque change slope range of a driving motor according to a driving demand torque change determined by the driving wheel end demand torque, and control torque of the driving motor to change according to a corresponding change slope range that has been adjusted, so that actual torque of the driving motor changes gently to a target thereof.

Preferably, when the driving mode of the hybrid power system is the parallel mode, the second control module is further configured to:

determine instant target torque of the driving motor; and
determine instant target torque of the engine according to the instant target torque of the driving motor and the driving wheel end demand torque so as to achieve gentle change control over the torque of the engine.

Preferably, when the driving mode of the hybrid power system is the parallel mode, the second control module is further configured to:
when the actual torque of the engine is less than target torque of the engine that is determined based on the driving wheel end demand torque, compensate for a difference between the target torque of the engine and the actual torque of the engine by means of the generator.

Preferably, the first control module includes:

a driving demand power determination unit configured to determine driving demand power in a current period according to driving wheel end demand torque collected in the current period;
a power difference determination unit configured to calculate a power difference between the driving demand power in the current period and driving demand power in a previous period;
a driving demand power change accumulated value determination unit configured to obtain a driving demand power change accumulated value in the current period based on the power difference and a driving demand power change accumulated value calculated in the previous period;
a torque and rotational-speed change slope determination unit configured to determine, according to the driving demand power change accumulated value in the current period, the torque change slope range of the engine and the rotational-speed change slope range of the generator based on the driving demand power change;
an engine torque change slope range determination unit configured to add the torque change slope range of the engine based on the driving demand power change and a base torque change slope range of the engine in the series mode that is determined according to preset logic to obtain the torque change slope range of the engine that is demanded in the series mode; and
a generator speed change slope range determination unit configured to add the rotational-speed change slope range of the generator based on the driving demand power change and a base rotational-speed change slope range of the generator in the series mode that is determined according to preset logic to obtain the rotational-speed change slope range of the generator that is demanded in the series mode.

Preferably, the second control module includes:

a torque difference determination unit configured to calculate a torque difference between driving wheel end demand torque in a current period and driving wheel end demand torque in a previous period;
a driving demand torque change accumulated value determination unit configured to obtain a driving demand torque change accumulated value in the current period based on the torque difference and a driving demand torque change accumulated value calculated in the previous period;
a torque change slope range determination unit configured to determine, according to the driving demand torque change accumulated value in the current period and a speed ratio of driving motor to wheel end, the torque change slope range of the driving motor based on the driving demand torque change; and
a driving motor torque change slope range determination unit configured to add the torque change slope range of the driving motor based on the driving demand torque change and a base torque change slope range of the driving motor in the parallel mode that is determined according to preset logic to obtain the torque change slope range of the driving motor that is demanded in the parallel mode.

The present invention further provides a vehicle, including the above torque control apparatus for a hybrid power system.

The present invention further provides a control device, including a processor, a memory, and a program or instructions stored in the memory and executable by the processor, wherein the program or the instructions, when executed by the processor, cause the steps of the torque control method for a hybrid power system as described above to be implemented.

The present invention further provides a readable storage medium. The readable storage medium has a program or instructions stored therein, and the program or the instructions, when executed by a processor, cause the steps of the torque control method for a hybrid power system as described above to be implemented.

The present invention has the following beneficial effects.

Compared with the prior art, based on series and parallel modes respectively, torque or power response speeds of power sources are coupled with a driver demand by design algorithms, and differences between reality and targets of the power sources are comprehensively considered, to ultimately achieve a purpose that an entire vehicle can meet a driver's demands for driving smoothness and power in different driving modes and different driving demand scenarios. When the driver demand changes rapidly, the power sources quickly respond to the torque and rotational-speed change targets to better meet the driver's power demand. When the driver demand changes slowly, the target torque and rotational-speeds of the power sources change slowly to better meet driving smoothness of the entire vehicle. By the above torque coordination control, economical requirements of a system energy management strategy are met, requirements of different drivers for drivability and smoothness of the entire vehicle in different scenarios are also met, and driving experience is improved.

BRIEF DESCRIPTION OF THE DRAWINGS

FIG. 1 is a schematic diagram of a series-parallel hybrid power system in this embodiment;

FIG. 2 is a schematic diagram of target changes of power sources in a series mode in this embodiment;

FIG. 3-1 is a schematic diagram of positive accumulative calculation of driving demand power in the series mode in this embodiment;

FIG. 3-2 is a schematic diagram of negative accumulative calculation of the driving demand power in the series mode in this embodiment;

FIG. 4 is a schematic diagram of target changes of the power sources in the parallel mode in this embodiment;

FIG. 5-1 is a schematic diagram of positive accumulative calculation of driving demand torque in the parallel mode in this embodiment;

FIG. 5-2 is a schematic diagram of negative accumulative calculation of the driving demand torque in the parallel mode in this embodiment; and

FIG. 6 is a schematic flowchart of a control method in this embodiment.

DETAILED DESCRIPTION

The technical solutions in the embodiments of the present invention will be clearly and completely described below with reference to the accompanying drawings in the embodiments of the present invention. Obviously, the described embodiments are only some of rather than all of the embodiments of the present invention. Based on the embodiments of the present invention, all other embodiments obtained by those of ordinary skill in the art without any creative efforts fall within the protection scope of the present invention.

It is to be noted that terms such as "first" and "second" used in the specification, claims, and the drawings of the present invention are intended to distinguish similar objects, but are not necessarily intended to describe a specific sequence or precedence order. It is to be understood that data used in this manner may be interchangeable where appropriate, so that the embodiments of the present invention described herein may be implemented in an order in addition to those illustrated or described herein. In addition, the terms such as "comprise/include", "have" and any variants thereof are intended to cover a non-exclusive inclusion, for example, processes, methods, systems, products, or servers including a series of steps or units is not limited to these steps or units listed, and may include other steps or units not listed, or may include other steps or units inherent to these processes, methods, products, or devices.

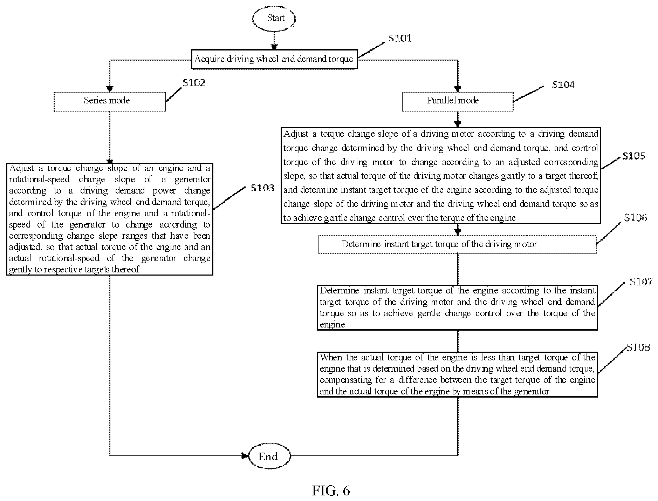

An embodiment of the present invention provides a torque control method for a hybrid power system, which couples torque or power response speeds of power sources with a driver demand, and comprehensively considers differences between reality and targets of the power sources, to ultimately achieve a purpose that an entire vehicle can meet a driver's demands for driving smoothness and power in different driving modes and different driving demand scenarios. As shown in FIG. 6, the method includes the following steps.

In S101, driving wheel end demand torque is acquired.

In S102, when it is recognized that a driving mode of the hybrid power system is a series mode, S103 is performed.

In S103, when the driving mode of the hybrid power system is the series mode, a torque change slope range of an engine and a rotational-speed change slope range of a generator are determined according to a driving demand power change determined by the driving wheel end demand torque, and torque of the engine and a rotational-speed of the generator are controlled to change according to corresponding change slope ranges that have been adjusted, so that actual torque of the engine and an actual rotational-speed of the generator change gently to respective targets thereof.

In S104, when it is recognized that the driving mode of the hybrid power system is a parallel mode, S105 is performed.

In S105, when the driving mode of the hybrid power system is the parallel mode, a torque change slope range of a driving motor is determined according to a driving demand torque change determined by the driving wheel end demand torque, and torque of the driving motor is controlled to change according to a corresponding change slope range that has been adjusted, so that actual torque of the driving motor changes gently to a target thereof.

In S106, instant target torque of the driving motor is determined.

In S107, instant target torque of the engine is determined according to the instant target torque of the driving motor and the driving wheel end demand torque so as to achieve gentle change control over the torque of the engine.

In S108, when the actual torque of the engine is less than target torque of the engine that is determined based on the driving wheel end demand torque, a difference between the target torque of the engine and the actual torque of the engine is compensated for by means of the generator.

In this embodiment, the above steps are introduced in detail.

Firstly, according to external characteristics and battery capacity limitations of the power sources, torque and rotational-speed boundaries of the engine, the generator, and the driving motor are calculated respectively.

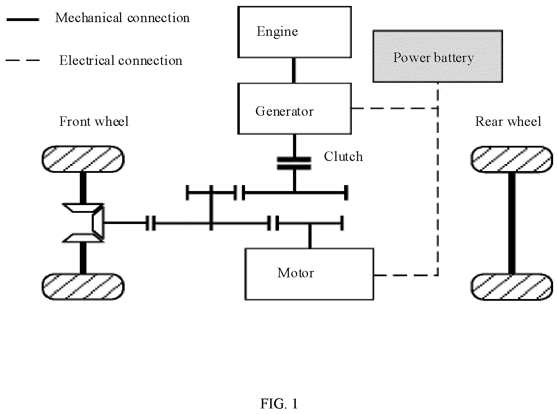

Secondly, a current operating mode of the system is determined according to states of the engine and a clutch. Referring to FIG. 1, the process is specifically as follows. When the engine is started and the clutch is opened, the system is in the series mode, energy outputted by the engine is only used by the generator to generate electricity and is not directly used for wheel driving, and power for wheel driving still comes from the driving motor. In order to keep the engine always in a high-efficiency range, a battery is required to participate, the generator generates electricity and supplies the electricity to the driving motor, excess electricity is stored, and if the electricity is insufficient, the battery compensates. When the engine is started and the clutch is closed, the system is in the parallel mode, the engine and the driving motor operate, the generator does not operate, and the clutch is engaged. In this case, the energy outputted by the engine is directly used for wheel driving. In order to keep the engine always in the high-efficiency range, the driving motor is required to participate. In combination with comparison between output power of the engine and wheel end consumed power, when the output power of the engine is greater than the wheel end consumed power, excess energy is generated by the generator and stored in the battery. When the output power of the engine is less than the wheel end consumed power, the battery outputs electric energy to the driving motor, and the driving motor outputs energy to assist the driving to ensure traveling of the vehicle. In addition, driving wheel end original demand torque is calculated based on an accelerator pedal opening degree and a vehicle speed, which is combined with boundaries and filter coefficients of the power sources to calculate the driving wheel end demand torque that can be transferred to the wheel end.

Then, coordinated torque control is performed on the engine, the generator, and the driving motor for the series mode and the parallel mode respectively.

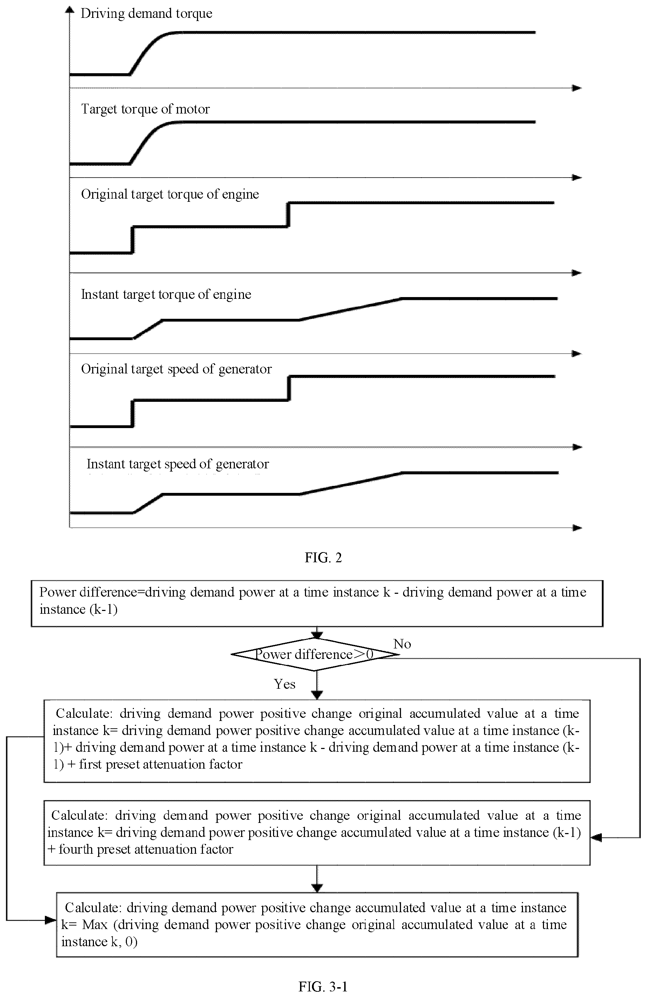

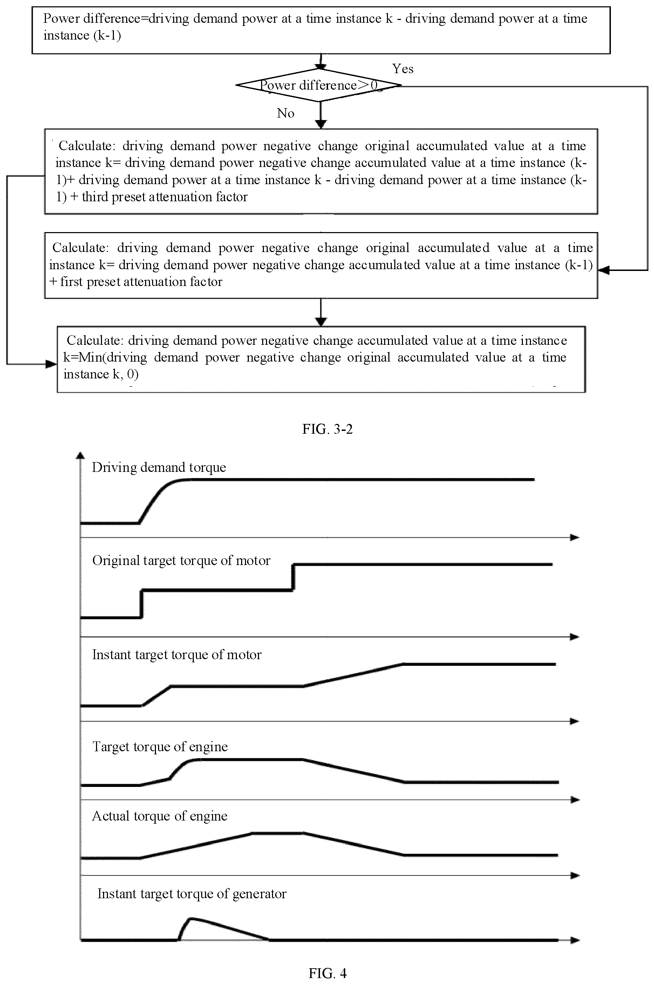

In the series mode, in the prior art, steady-state target torque of the engine has two step changes. The first one is caused by a change in the driver demand, and the second one is caused by an energy management strategy. A steady-state target speed value of the generator has no significant change. As shown in FIG. 2, FIG. 3-1, and FIG. 3-2, in this embodiment, for the series mode, the control method includes the following steps.

In S1, driving demand power $P_{DrvReq} = \dfrac{T_{DrvReq} \cdot n_{Whl}}{9550}$ is calculated based on driving wheel end demand torque $T_{DrvReq}$ and an actual wheel speed $n_{Whl}$.

In S2, Target torque of a driving motor is $T_{Mot} = \dfrac{T_{DrvReq}}{i_{MotWhl}}$, whose magnitude is within a capability boundary range of the driving motor, where $i_{MotWhl}$ denotes a speed ratio of driving motor to wheel end. Referring to FIG. 2, in the series mode, a process of changing actual torque of the driving motor to target torque of the driving motor does not require gentle control. That is, a control change process thereof is consistent with that in the prior art.

In S3, the driving demand power change accumulated value includes a driving demand power positive change accumulated value and a driving demand power negative change accumulated value in different periods, and the driving demand power positive change accumulated value is greater than or equal to 0. The driving demand power negative change accumulated value is less than or equal to 0. For positive and negative driving demand power respectively, a driving demand power change value (i.e., a power difference between driving demand power in a current period and a previous period) in each calculation period (10 ms) is accumulated. At the same time, preset attenuation factors are set. When the change in the driving demand power is negative, the driving demand power positive change accumulated value is superimposed with a negative attenuation factor in each period and remains unchanged until the driving demand power positive change accumulated value attenuates to zero, and the driving demand power positive change accumulated value is $\Sigma P_{DrvReq\_Pos}$. When the change in the driving demand power is positive, the driving demand power negative change accumulated value is superimposed with a positive attenuation factor in each period until the driving demand power negative change accumulated value attenuates to zero, and the driving demand power negative change accumulated value is $\Sigma P_{DrvReq\_Neg}$. A schematic diagram of a calculation process is shown in FIG. 3.

In summary, step S3 is specifically:

calculating a power difference between the driving demand power in the current period and driving demand power in a previous period;
if the power difference is greater than 0, then
adding the driving demand power positive change accumulated value calculated in the previous period, the power difference, and a first preset attenuation factor with a negative value to obtain a driving demand power positive change original accumulated value, and taking a greater one selected from the driving demand power positive change original accumulated value and 0 to obtain a driving demand power positive change accumulated value in the current period; and
if the driving demand power negative change accumulated value calculated in the previous period is 0, determining a driving demand power negative change accumulated value in the current period to be 0; if the driving demand power negative change accumulated value calculated in the previous period is less than 0, adding the driving demand power negative change accumulated value calculated in the previous period and a second preset attenuation factor with a positive value to obtain a driving demand power negative change original accumulated value, and taking a smaller one selected from the driving demand power negative change original accumulated value and 0 to obtain the driving demand power negative change accumulated value in the current period; and
if the power difference is less than or equal to 0, then
adding the driving demand power negative change accumulated value calculated in the previous period, the power difference, and a third preset attenuation factor with a positive value to obtain the driving demand power negative change original accumulated value, and taking a smaller one selected from the driving demand power negative change original accumulated value and 0 to obtain the driving demand power negative change accumulated value in the current period; and

if the driving demand power positive change accumulated value calculated in the previous period is 0, determining the driving demand power positive change accumulated value in the current period to be 0; if the driving demand power positive change accumulated value calculated in the previous period is greater than 0, adding the driving demand power positive change accumulated value calculated in the previous period and a fourth preset attenuation factor with a negative value to obtain the driving demand power positive change original accumulated value, and taking a greater one selected from the driving demand power positive change original accumulated value and 0 to obtain the driving demand power positive change accumulated value in the current period.

In the following, step S3 is explained with an example.

For example, driving demand power in the first period is 0 kw, driving demand power in the second period is 5 kw, and a first preset attenuation factor and a fourth preset attenuation factor required are -0.1 kw. A second preset attenuation factor and a third preset attenuation factor are +0.1 kw. On this basis, a power difference at the second moment is 5 kw, which is a positive value. A driving demand power positive change accumulated value in the second period is max((5 kw-0 kw)+(-0.1 kw),0) = 4.9 kw, and a driving demand power negative change accumulated value in the second period is 0. For example, driving demand power in the third period is 4 kw. Since a power difference between the third period and the second period (4 kw-5 kw=-1 kw) is negative, a driving demand power positive change accumulated value in the third period is max(4.9 kw+(-0.1 kw),0)=4.8 kw, and a driving demand power negative change accumulated value in the third period is min(0+(4 kw-5 kw)+0.1 kw,0)=- 0.9 kw. For example, driving demand power in the third period is 7 kw. Since the power difference between the third period and the second period (7 kw-5 kw=2 kw) is positive, the driving demand power positive change accumulated value in the third period is max(4.9 kw+(7 kw-5 kw)+(-0.1 kw),0)=6.8 kw, and the driving demand power negative change accumulated value in the third period is min(0+0.1 kw, 0)=0 kw.

For example, driving demand power in the first period is 0 kw, driving demand power in the second period is -5 kw, and a first preset attenuation factor and a fourth preset attenuation factor required are -0.1 kw. A second preset attenuation factor and a third preset attenuation factor are +0.1 kw. On this basis, the power difference at the second moment is -5 kw, which is a negative value. The driving demand power negative change accumulated value in the second period is min((-5 kw-0 kw)+0.1 kw, 0) = -4.9 kw, and the driving demand power positive change accumulated value in the second period is 0. For example, the driving demand power in the third period is 1 kw. Since the power difference between the third period and the second period (1 kw-(-5 kw) = 6 kw) is positive, the driving demand power positive change accumulated value in the third period is max(0 kw+1 kw-(-5 kw)+(-0.1 kw),0)=5.9 kw, and the driving demand power negative change accumulated value in the third period is min(-4.9 kw+0.1 kw, 0)=-4.8 kw. For example, the driving demand power in the third period is -7 kw. Since the power difference between the third period and the second period (7 kw-5 kw=-12 kw) is negative, the driving demand power positive change accumulated value in the third period is 0, and the driving demand power negative change accumulated value in the third period is min(-4.9 kw+(-7 kw-5 kw)+0.1 kw, 0)=-16.8 kw.

In S4, in combination with actual torque of the engine $T_{Eng}$, a rotational-speed change positive accumulated value of the generator $\sum n_{Gen\_Pos} = \dfrac{\sum P_{DrvReq\_Pos} \cdot 9550}{T_{Eng}}$ and a rotational-speed change negative accumulated value of the generator $\sum n_{Gen\_Neg} = \dfrac{\sum P_{DrvReq\_Neg} \cdot 9550}{T_{Eng}}$ are calculated respectively based on the driving demand power positive change accumulated value $\sum P_{DrvReq\_Pos}$ and the driving demand power negative change accumulated value $\sum P_{DrvReq\_Neg}$ respectively. That is, according to the driving demand power change accumulated value in the current period and the actual torque of the engine, a rotational-speed change accumulated value of the generator is determined based on the driving demand power change.

In S5, in combination with an actual rotational-speed of the generator $n_{Gen}$, a torque change positive accumulated value of the engine $\sum T_{Eng\_Pos} = \dfrac{\sum P_{DrvReq\_Pos} \cdot 9550}{n_{Gen}}$ and a torque change negative accumulated value of the engine $$\sum T_{Eng\_Neg} = \frac{\sum P_{DrvReq\_Neg} \cdot 9550}{n_{Gen}}$$ are calculated based on the driving demand power positive change accumulated value $\Sigma P_{DrvReq\_Pos}$ and the driving demand power negative change accumulated value $\Sigma P_{DrvReq\_Neg}$ respectively. That is, according to the driving demand power change accumulated value in the current period and the actual rotational-speed of the generator, a rotational-speed change accumulated value of the generator is determined based on the driving demand power change.

In S6, if the rotational-speed of the generator and the torque of the engine satisfy the driving demand power change within time $t_{Gen\_DrvReq}$ and $t_{Eng\_DrvReq}$ respectively, a rotational-speed change positive slope of the generator and a rotational-speed change negative slope of the generator based on the driving demand power change are

$$\Delta n_{Gen\_DrvReq\_PosMax} = \frac{\sum n_{Gen\_Pos}}{t_{Gen\_DrvReq}}$$ and $$\Delta n_{Gen\_DrvReq\_NegMax} = \frac{\sum n_{Gen\_Neg}}{t_{Gen\_DrvReq}}$$ re-

spectively, and a torque change positive slope of the engine and a torque change negative slope of the engine based on the driving demand power change are $$\Delta T_{Eng\_DrvReq\_PosMax} = \frac{\sum T_{Eng\_Pos}}{t_{Eng\_DrvReq}}$$ and

$$\Delta T_{Eng\_DrvReq\_NegMax} = \frac{\sum T_{Eng\_Neg}}{t_{Eng\_DrvReq}}$$ respectively. That is, the torque change slope range of the engine is determined according to the rotational-speed change accumulated value of the generator. The rotational-speed change slope range of the generator is determined according to the rotational-speed change accumulated value of the generator.

In S7, the torque change slope range of the engine according to the driving demand power change is superimposed with a base torque change slope range of the engine, and a torque positive change slope of the engine $\Delta T_{Eng\_PosMax} = \Delta T_{Eng\_DrvReq\_PosMax} + \Delta T_{Eng\_Base\_PosMax}$ and a torque negative change slope of the **engine** $\Delta T_{Eng\_NegMax} = \Delta T_{Eng\_DrvReq\_NegMax} + \Delta T_{Eng\_Base\_NegMax}$ may be calculated, where $\Delta T_{Eng\_Base\_PosMax}$ denotes a base torque positive change slope range of the engine in the series mode that is determined according to preset logic, and $\Delta T_{Eng\_Base\_NegMax}$ denotes a base torque negative change slope range of the engine in the series mode that is determined according to the preset logic. That is, the torque change slope range of the engine based on the driving demand power change and the base torque change slope range of the engine in the series mode that is determined according to the preset logic are added to obtain the torque change slope range of the engine that is demanded in the series mode.

In S8, the rotational-speed change slope range of the generator according to the driving demand power change is superimposed with a base rotational-speed change slope range of the generator, and a rotational-speed positive change slope of the generator $\Delta n_{Gen\_PosMax} = \Delta n_{Gen\_DrvReq\_PosMax} + \Delta n_{Gen\_Base\_PosMax}$ and a rotational-speed negative change slope of the generator $\Delta n_{Gen\_NegMax} = \Delta n_{Gen\_DrvReq\_NegMax} + \Delta n_{Gen\_Base\_NegMax}$ may be calculated, where $\Delta n_{Gen\_Base\_PosMax}$ denotes a base rotational-speed positive change slope range of the generator in the series mode that is determined according to the preset logic, and $\Delta n_{Gen\_Base\_NegMax}$ denotes a base rotational-speed negative change slope range of the generator in the series mode that is determined according to the preset logic. That is, the rotational-speed change slope range of the generator based on the driving demand power change and the base rotational-speed change slope range of the generator in the series mode that is determined according to the preset logic are added to obtain the rotational-speed change slope range of the generator that is demanded in the series mode.

The preset logic in step S7 and step S8 refers to logic of determining a change slope of a change from the actual torque of the engine to the target torque and a change from the actual rotational-speed of the generator to the target speed determined in the prior art.

In S9, in a process of catching up with the target value, upper and lower limits of the change value of the torque of the engine at each moment do not exceed limits of the slopes $\Delta T_{Eng\_PosMax}$ and $\Delta T_{Eng\_NegMax}$ determined above respectively, and upper and lower limits of the change value of the rotational-speed of the generator at each moment do not exceed limits of the slopes $\Delta n_{Gen\_PosMax}$ and $\Delta n_{Gen\_NegMax}$ respectively.

In S10, when original target torque of the engine at a time instance k is $T_{k|EngReq\_Raw}$, instant target **torque thereof is** $T_{k|Eng\_Req} = T_{k-1|Eng\_Req} + \max(\Delta T_{Eng\_NegMax}, \min(\Delta T_{Eng\_PosMax}, T_{k|Eng\_Req\_Raw} - T_{k-1|Eng\_Req}))$.

In S11, when an original target speed of the generator at the time instance k is $n_{k|Gen\_Req\_Raw}$, a instant target speed thereof is

$$n_{k|Gen\_Req}=n_{k-1|Gen\_Req}+\max(\Delta n_{Gen\_NegMax},\ \min(\Delta n_{Gen\_PosMax},\ n_{k|Gen\_Req\_Raw}-n_{k-1|Gen\_Req})).$$

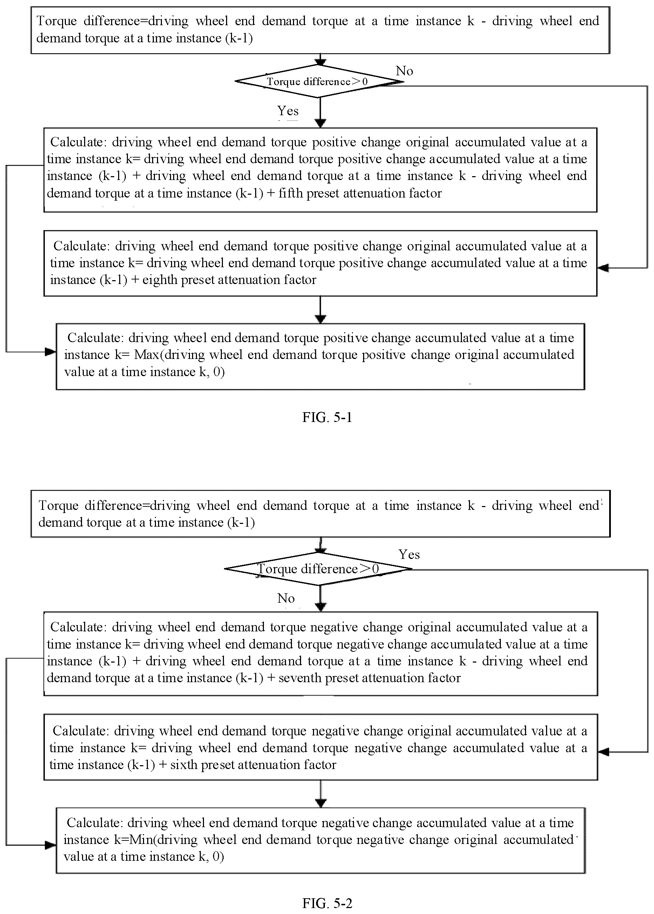

In the parallel mode, a steady-state target torque value of the engine has two step changes. The first one is caused by a change in the driver demand, and the second one is caused by the energy management strategy. The steady-state target speed value of the generator has no significant change. In this embodiment, schematic diagrams of instant targets of the generator, the engine, and the driving motor in the parallel mode are shown in FIG. 4, FIG. 5-1, and FIG. 5-2. A calculation process thereof specifically includes the following steps.

In S1, for positive and negative driving wheel end demand torque $T_{DrvReq}$ respectively, a driving wheel end demand torque change value in each calculation period is accumulated, and at the same time, preset attenuation factors are set. When a driving wheel end demand torque change is negative, a positive change accumulated value is superimposed with a negative preset attenuation factor in each period and remains unchanged until a driving wheel end demand torque accumulated value $\Sigma T_{DrvReq\_Pos}$ attenuates to zero. When the driving wheel end demand torque change is positive, a negative change accumulated value is superimposed with a positive preset attenuation factor in each period until a driving wheel end demand torque accumulated value $\Sigma T_{DrvReq\_Neg}$ attenuates to zero. A calculation process is shown in FIG. 5. In summary, step S1 is specifically: if the torque difference is greater than 0, then

adding a driving demand torque positive change accumulated value calculated in the previous period, the torque difference, and a fifth preset attenuation factor with a negative value to obtain a driving demand torque positive change original accumulated value, and taking a greater one selected from the driving demand torque positive change original accumulated value and 0 to obtain a driving demand torque positive change accumulated value in the current period; and

if a driving demand torque negative change accumulated value calculated in the previous period is 0, determining a driving demand torque negative change accumulated value in the current period to be 0; if the driving demand torque negative change accumulated value calculated in the previous period is less than 0, adding the driving demand torque negative change accumulated value calculated in the previous period and a sixth preset attenuation factor with a positive value to obtain a driving demand torque negative change original accumulated value, and taking a smaller one selected from the driving demand torque negative change original accumulated value and 0 to obtain the driving demand torque negative change accumulated value in the current period; and

if the torque difference is less than or equal to 0, then

adding the driving demand torque negative change accumulated value calculated in the previous period, the torque difference, and a seventh preset attenuation factor with a positive value to obtain the driving demand torque negative change original accumulated value, and taking a smaller one selected from the driving demand torque negative change original accumulated value and 0 to obtain the driving demand torque negative change accumulated value in the current period; and

if the driving demand torque positive change accumulated value calculated in the previous period is 0, determining the driving demand torque positive change accumulated value in the current period to be 0; if the driving demand torque positive change accumulated value calculated in the previous period is greater than 0, adding the driving demand torque positive change accumulated value calculated in the previous period and an eighth preset attenuation factor with a negative value to obtain the driving demand torque positive change original accumulated value, and taking a greater one selected from the driving demand torque positive change original accumulated value and 0 to obtain the driving demand torque positive change accumulated value in the current period.

For example, driving wheel end demand torque in the first period is 0 N, driving wheel end demand torque in the second period is 5 N, and a fifth preset attenuation factor and an eighth preset attenuation factor required are -0.1 N. A sixth preset attenuation factor and a seventh preset attenuation factor are +0.1 N. On this basis, a torque difference at the second moment is 5 N, which is a positive value. A driving wheel end demand torque positive change accumulated value in the second period is max((5 N-0 N)+(-0.1 N),0)=4.9 N, and a driving wheel end demand torque negative change accumulated value in the second period is 0. For example, driving wheel end demand torque in the third period is 4 N. Since a torque difference between the third period and the second period (4 N-5 N=-1 N) is negative, a driving wheel end demand torque positive change accumulated value in the third period is max(4.9 N+(-0.1 N),0)=4.8 N, and a driving wheel end demand torque negative change accumulated value in the third period is min(0+(4 N-5 N)+0.1 N,0)=-0.9 N. For example, the driving wheel end demand torque in the third period is 7 N. Since the torque difference between the third period and the second period (7 N-5 N=2N) is positive, the driving wheel end demand torque positive change accumulated value in the third period is max(4.9 N+(7 N-5 N) +(-0.1 N),0)=6.8 N, and the driving wheel end demand torque negative change accumulated value in the third period is min(0+0.1 N,0)=0 N.

For example, the driving wheel end demand torque in the first period is 0 N, the driving wheel end demand torque in the second period is -5 N, and the fifth preset attenuation factor and the eighth preset attenuation factor required are -0.1 N. the sixth preset attenuation factor and the seventh preset attenuation factor are +0.1 N. On this basis, the torque difference at the second moment is -5 N, which is a negative value. The driving wheel end demand torque negative change accumulated value in the second period is min((-5 N-0 N)+0.1 N,0)=-4.9 N, and the driving wheel end demand torque positive change accumulated value in the second period is 0. For example, the driving wheel end demand torque in the third period is 1 N. Since the torque difference between the third period and the second period (1 N-(-5 N)=6 N) is positive, the driving wheel end demand torque positive change accumulated value in the third period is max(0 N+1 N-(-5 N)+(-0.1 N),0)=5.9N, and the driving wheel end demand torque negative change accumulated value in the third period is min(-4.9 N+0.1 N,0)=-4.8 N. For example, the driving wheel end demand torque in the third period is -7 N. Since the torque difference between the third period and the second period (-7N-(-5 N)=-2N) is negative, the driving wheel end demand torque positive change accumulated value in the third period is 0, and the driving wheel end demand torque negative change accumulated value in the third period is min(-4.9 N+(-7 N-(-5 N))+0.1 N,0)=-6.8 N.

In S2, the driving wheel end demand torque positive change accumulated value and the driving wheel end demand torque negative change accumulated value above superimposed with the preset attenuation factors are combined with the speed ratio of driving motor to wheel end $i_{Mot}$ to calculate a torque change positive accumulated value of the driving motor $\sum T_{Mot\_Pos} = \dfrac{\sum T_{DrvReq\_Pos}}{i_{Mot}}$ and a torque change negative accumulated value of the driving motor $\sum T_{Mot\_Neg} = \dfrac{\sum T_{DrvReq\_Neg}}{i_{Mot}}$ respectively. That is, according to the driving demand torque change accumulated value and the speed ratio of driving motor to wheel end, a torque change accumulated value of the driving motor is determined based on the driving demand torque change.

In S3, if the torque of the driving motor satisfies the driving demand torque change within time $t_{Mot\_DrvReq}$, a torque positive change slope range of the driving motor and a torque negative change slope range of the driving motor based on the driving demand torque change are $\Delta T_{Mot\_DrvReq\_PosMax} = \dfrac{\sum T_{Mot\_Pos}}{t_{Mot\_DrvReq}}$ and

$$\Delta T_{Mot\_DrvReq\_NegMax} = \dfrac{\sum T_{Mot\_Neg}}{t_{Mot\_DrvReq}}$$ respectively. That is, a torque change slope range of the driving motor based on the driving demand torque change is determined according to the torque change accumulated value of the driving motor based on the driving demand torque change.

In S4, a driving demand torque change slope is superimposed with a base slope (that is, a base torque change slope range of the driving motor in the parallel mode that is determined according to the preset logic), and a torque positive change slope of the driving motor $\Delta T_{Mot\_PosMax}=\Delta T_{Mot\_DrvReq\_PosMax}+\Delta T_{Mot\_Base\_PosMax}$ and a torque negative change slope of the driving motor $\Delta T_{Mot\_NegMax}=\Delta T_{Mot\_DrvReq\_NegMax}+\Delta T_{Mot\_Base\_NegMax}$ may be calculated, where $\Delta T_{Mot\_Base\_PosMax}$ denotes a base torque positive change slope of the driving motor in the parallel mode that is determined according to the preset logic, and $\Delta T_{Mot\_Base\_NegMax}$ denotes a base torque negative change slope of the driving motor in the parallel mode that is determined according to the preset logic. That is, the torque change slope range of the driving motor based on the driving demand torque change and the base torque change slope range of the driving motor in the parallel mode that is determined according to the preset logic are added to obtain the torque change slope range of the driving motor that is demanded in the parallel mode.

In S5, in the process of catching up with the target value, upper and lower limits of the change value of the torque of the driving motor at each moment do not exceed limits of the slopes $\Delta T_{Mot\_PosMax}$ and $\Delta T_{Mot\_NegMax}$ respectively.

In S6, when original target torque of the driving motor at the time instance k is $T_{k|Mot\_Req\_Raw}$, instant target torque thereof is

$$T_{k|Mot\_Req} = T_{k-1|Mot\_Req} + \max\left(\Delta T_{Mot\_NegMax}, \min\left(\Delta T_{Mot\_PosMax}, T_{k|Mot\_Req\_Raw} - T_{k-1|Mot\_Req}\right)\right)$$ .

In S7, a instant torque target value of the engine at the time instance k $T_{k|Eng\_Req}$ is calculated from the driving wheel end demand torque $T_{k|DrvReq}$ and the instant target torque of the driving motor $T_{k|Mot\_Req}$ in S6:

$$T_{k|Eng\_Req} = \frac{T_{k|DrvReq} - T_{k|Mot\_Req} \cdot i_{Mot}}{i_{Eng}}$$ , where $i_{Eng}$ denotes a speed ratio of engine to wheel end.

In S8, in consideration of a significant delay in a response to the torque of the engine and a response speed is much less than that of the generator, in the parallel mode, a difference between target torque and actual torque of the engine is compensated for by means of the generator, and the target torque of the generator $T_{k|Gen\_Req}$ is

$$T_{k|Gen\_Req} = \frac{i_{Eng} \cdot \left(T_{k|Eng\_Req} - T_{k|Eng\_Act}\right)}{i_{Gen}}$$ , where $i_{Gen}$ denotes a speed ratio of generator to wheel end, and

$T_{k|Eng\_Act}$ denotes actual torque of the engine at the time instance k.

The present invention further provides a torque control apparatus for a hybrid power system, including:

an acquisition module configured to acquire driving wheel end demand torque;
a first control module configured to, when a driving mode of the hybrid power system is a series mode, adjust a torque change slope range of an engine and a rotational-speed change slope range of a generator according to a driving demand power change determined by the driving wheel end demand torque, and control torque of the engine and a rotational-speed of the generator to change according to corresponding slopes after adjustment, so that actual torque of the engine and an actual rotational-speed of the generator change gently to respective targets thereof; and
a second control module configured to, when the driving mode of the hybrid power system is a parallel mode, adjust a torque change slope range of a driving motor according to a driving demand torque change determined by the driving wheel end demand torque, and control torque of the driving motor to change according to a corresponding slope after adjustment, so that actual torque of the driving motor changes gently to a target thereof; and determine instant target torque of the engine according to the instant target torque of the driving motor and the driving wheel end demand torque so as to achieve gentle change control over the torque of the engine.

Preferably, when the driving mode of the hybrid power system is the parallel mode, the second control module is further configured to:
when the actual torque of the engine is less than target torque of the engine that is determined based on the driving wheel end demand torque, compensate for a difference between the target torque of the engine and the actual torque of the engine by means of the generator.

Preferably, the first control module includes:

a driving demand power determination unit configured to determine driving demand power in a current period according to driving wheel end demand torque collected in the current period;
a power difference determination unit configured to calculate a power difference between the driving demand power in the current period and driving demand power in a previous period;
a driving demand power change accumulated value determination unit configured to obtain a driving demand power change accumulated value in the current period based on the power difference and a driving demand power change accumulated value calculated in the previous period;
a torque and rotational-speed change slope determination unit configured to determine, according to the driving demand power change accumulated value in the current period, the torque change slope range of the engine and the rotational-speed change slope range of the generator based on the driving demand power change;
an engine torque change slope range determination unit configured to add the torque change slope range of the engine based on the driving demand power change and a base torque change slope range of the engine in the series mode that is determined according to preset logic to obtain the torque change slope range of the engine that is demanded in the series mode; and
a generator speed change slope range determination unit configured to add the rotational-speed change slope range of the generator based on the driving demand power change and a base rotational-speed change slope range of the generator in the series mode that is determined according to preset logic to obtain the rotational-speed change slope range of the generator that is demanded in the series mode.

Preferably, the second control module includes:

a torque difference determination unit configured to calculate a torque difference between driving wheel end demand torque in a current period and driving wheel end demand torque in a previous period;

a driving demand torque change accumulated value determination unit configured to obtain a driving demand torque change accumulated value based on the torque difference and a driving demand torque change accumulated value calculated in the previous period;

a torque change slope range determination unit configured to determine, according to the driving demand torque change accumulated value and a speed ratio of driving motor to wheel end, the torque change slope range of the driving motor based on the driving demand torque change; and

a driving motor torque change slope range determination unit configured to add the torque change slope range of the driving motor based on the driving demand torque change and a base torque change slope range of the driving motor in the parallel mode that is determined according to preset logic to obtain the torque change slope range of the driving motor that is demanded in the parallel mode.

The present invention further provides a vehicle, including the above torque control apparatus for a hybrid power system.

The present invention further provides a control device, including a processor, a memory, and a program or instructions stored in the memory and executable by the processor, wherein the program or the instructions, when executed by the processor, cause the steps of the torque control method for a hybrid power system as described above to be implemented.

The present invention further provides a readable storage medium. The readable storage medium has a program or instructions stored therein, and the program or the instructions, when executed by a processor, cause the steps of the torque control method for a hybrid power system as described above to be implemented.

The above descriptions are only preferred implementations of the present invention. It should be pointed out that, those of ordinary skill in the art may further make several improvements and modifications without departing from the principle of the present invention. Such improvements and modifications should also fall within the protection scope of the present invention.

## Claims

1. A torque control method for a hybrid power system, **characterized by** comprising:

acquiring driving wheel end demand torque;

when a driving mode of the hybrid power system is a series mode, determining a torque change slope range of an engine and a rotational-speed change slope range of a generator according to a driving demand power change determined by the driving wheel end demand torque, and controlling torque of the engine and a rotational-speed of the generator to change according to corresponding change slope ranges that have been adjusted, so that actual torque of the engine and an actual rotational-speed of the generator change gently to respective targets thereof; and

when the driving mode of the hybrid power system is a parallel mode, determining a torque change slope range of a driving motor according to a driving demand torque change determined by the driving wheel end demand torque, and controlling torque of the driving motor to change according to a corresponding change slope range that has been adjusted, so that actual torque of the driving motor changes gently to a target thereof.

2. The torque control method for a hybrid power system according to claim 1, **characterized in that**, when the driving mode of the hybrid power system is the parallel mode, the method further comprises:

determining instant target torque of the driving motor; and

determining instant target torque of the engine according to the instant target torque of the driving motor and the driving wheel end demand torque so as to achieve gentle change control over the torque of the engine.

3. The torque control method for a hybrid power system according to claim 1 or 2, **characterized in that**, when the driving mode of the hybrid power system is the parallel mode, the method further comprises:

when the actual torque of the engine is less than target torque of the engine that is determined based on the driving wheel end demand torque, compensating for a difference between the target torque of the engine and the actual torque of the engine by means of the generator.

4. The torque control method for a hybrid power system according to claim 1, **characterized in that** the step of determining a torque change slope range of an engine and a rotational-speed change slope range of a generator according to a driving demand power change determined by the driving wheel end demand torque comprises:

determining driving demand power in a current period according to driving wheel end demand torque collected in the current period;

calculating a power difference between the driving demand power in the current period and driving demand power in a previous period;

obtaining a driving demand power change accumulated value in the current period based on the power difference and a driving demand power change accumulated value calculated in the previous period;

determining, according to the driving demand power change accumulated value in the current period, the torque change slope range of the engine and the rotational-speed change slope range of the generator based on the driving demand power change;

adding the torque change slope range of the engine based on the driving demand power change and a base torque change slope range of the engine in the series mode that is determined according to preset logic to obtain the torque change slope range of the engine that is demanded in the series mode; and

adding the rotational-speed change slope range of the generator based on the driving demand power change and a base rotational-speed change slope range of the generator in the series mode that is determined according to preset logic to obtain the rotational-speed change slope range of the generator that is demanded in the series mode.

5. The torque control method for a hybrid power system according to claim 4, **characterized in that** the step of determining, according to the driving demand power change accumulated value in the current period, the torque change slope range of the engine and the rotational-speed change slope range of the generator based on the driving demand power change comprises:

determining, according to the driving demand power change accumulated value in the current period and the actual rotational-speed of the generator, a rotational-speed change accumulated value of the generator based on the driving demand power change;

determining the torque change slope range of the engine according to the rotational-speed change accumulated value of the generator;

determining, according to the driving demand power change accumulated value in the current period and the actual torque of the engine, a rotational-speed change accumulated value of the generator based on the driving demand power change; and

determining the rotational-speed change slope range of the generator according to the rotational-speed change accumulated value of the generator.

6. The torque control method for a hybrid power system according to claim 4, **characterized in that** the driving demand power change accumulated value comprises a driving demand power positive change accumulated value and a driving demand power negative change accumulated value in different periods, and the step of obtaining a driving demand power change accumulated value in the current period based on the power difference and a driving demand power change accumulated value calculated in the previous period comprises:

if the power difference is greater than 0, then

adding the driving demand power positive change accumulated value calculated in the previous period, the power difference, and a first preset attenuation factor with a negative value to obtain a driving demand power positive change original accumulated value, and taking a greater one selected from the driving demand power positive change original accumulated value and 0 to obtain a driving demand power positive change accumulated value in the current period; and

if the driving demand power negative change accumulated value calculated in the previous period is 0, determining a driving demand power negative change accumulated value in the current period to be 0; if the driving demand power negative change accumulated value calculated in the previous period is less than 0, adding the driving demand power negative change accumulated value calculated in the previous period and a second preset attenuation factor with a positive value to obtain a driving demand power negative change original accumulated value, and taking a smaller one selected from the driving demand power negative change original accumulated value and 0 to obtain the driving demand power negative change accumulated value in the current period; and

if the power difference is less than or equal to 0, then

adding the driving demand power negative change accumulated value calculated in the previous period, the power difference, and a third preset attenuation factor with a positive value to obtain the driving demand power negative change original accumulated value, and taking a smaller one selected from the driving demand power negative change original accumulated value and 0 to obtain the driving demand power negative change accumulated value in the current period; and

if the driving demand power positive change accumulated value calculated in the previous period is 0, determining the driving demand power positive change accumulated value in the current period to be 0; if the driving demand power positive change accumulated value calculated in the previous period is greater than 0, adding the driving demand power positive change accumulated value calculated in the previous period and a fourth preset attenuation factor with a negative value to obtain the driving demand power positive change original accumulated value, and taking a greater one selected from the driving demand power positive change original accumulated value and 0 to obtain the driving demand power positive change accumulated value in the current period.

7. The torque control method for a hybrid power system according to claim 1, **characterized in that** the step of determining a torque change slope range of a driving motor according to a driving demand torque change determined by the driving wheel end demand torque comprises:

calculating a torque difference between driving wheel end demand torque in a current period and driving wheel end demand torque in a previous period;

obtaining a driving demand torque change accumulated value in the current period based on the torque difference and a driving demand torque change accumulated value calculated in the previous period;

determining, according to the driving demand torque change accumulated value in the current period and a speed ratio of driving motor to wheel end, the torque change slope range of the driving motor based on the driving demand torque change; and

adding the torque change slope range of the driving motor based on the driving demand torque change and a base torque change slope range of the driving motor in the parallel mode that is determined according to preset logic to obtain the torque change slope range of the driving motor that is demanded in the parallel mode.

8. The torque control method for a hybrid power system according to claim 7, **characterized in that** the step of obtaining a driving demand torque change accumulated value based on the torque difference and a driving demand torque change accumulated value calculated in the previous period comprises:

if the torque difference is greater than 0, then

adding a driving demand torque positive change accumulated value calculated in the previous period, the torque difference, and a fifth preset attenuation factor with a negative value to obtain a driving demand torque positive change original accumulated value, and taking a greater one selected from the driving demand torque positive change original accumulated value and 0 to obtain a driving demand torque positive change accumulated value in the current period; and

if a driving demand torque negative change accumulated value calculated in the previous period is 0, determining a driving demand torque negative change accumulated value in the current period to be 0; if the driving demand torque negative change accumulated value calculated in the previous period is less than 0, adding the driving demand torque negative change accumulated value calculated in the previous period and a sixth preset attenuation factor with a positive value to obtain a driving demand torque negative change original accumulated value, and taking a smaller one selected from the driving demand torque negative change original accumulated value and 0 to obtain the driving demand torque negative change accumulated value in the current period; and

if the torque difference is less than or equal to 0, then

adding the driving demand torque negative change accumulated value calculated in the previous period, the torque difference, and a seventh preset attenuation factor with a positive value to obtain the driving demand torque negative change original accumulated value, and taking a smaller one selected from the driving demand torque negative change original accumulated value and 0 to obtain the driving demand torque negative change accumulated value in the current period; and

if the driving demand torque positive change accumulated value calculated in the previous period is 0, determining the driving demand torque positive change accumulated value in the current period to be 0; if the driving demand torque positive change accumulated value calculated in the previous period is greater than 0, adding the driving demand torque positive change accumulated value calculated in the previous period and an eighth preset attenuation factor with a negative value to obtain the driving demand torque positive change original accumulated value, and taking a greater one selected from the driving demand torque positive change original accumulated value and 0 to obtain the driving demand torque positive change accumulated value in the current period.

9. The torque control method for a hybrid power system according to claim 2, **characterized in that** the instant target torque of the engine is determined by the following formulaby the following formula:

$$T_{k|Eng\_Req} = \frac{T_{k|DrvReq} - T_{k|Mot\_Req} \cdot i_{Mot}}{i_{Eng}}$$

where $T_{k|Eng\_Req}$ denotes instant target torque of the engine at a time instance k, $T_{k|Mot\_Req}$ denotes instant target torque of the driving motor at the time instance k, $T_{k|DrvReq}$ denotes driving wheel end demand torque at the time instance k, $i_{Mot}$ denotes a speed ratio of driving motor to wheel end, and $i_{Eng}$ denotes a speed ratio of engine to wheel end.

10. The torque control method for a hybrid power system according to claim 3, **characterized in that**, in the step of compensating for a difference between the target torque of the engine and the actual torque of the engine by means of the generator, instant target torque of the generator is determined by the following formula:

$$T_{k|Gen\_Req} = \frac{i_{Eng} \cdot \left( T_{k|Eng\_Req} - T_{k|Eng\_Act} \right)}{i_{Gen}}$$

where $T_{k|Gen\_Req}$ denotes instant target torque of the generator at a time instance k, $i_{Gen}$ denotes a speed ratio of generator to wheel end, $i_{Eng}$ denotes a speed ratio of engine to wheel end, $T_{k|Eng\_Act}$ denotes actual torque of the engine at the time instance k, and $T_{k|Eng\_Req}$ denotes instant target torque of the engine at the time instance k.

11. A torque control apparatus for a hybrid power system, **characterized by** comprising:

an acquisition module configured to acquire driving wheel end demand torque;
a first control module configured to, when a driving mode of the hybrid power system is a series mode, determine a torque change slope range of an engine and a rotational-speed change slope range of a generator according to a driving demand power change determined by the driving wheel end demand torque, and control torque of the engine and a rotational-speed of the generator to change according to corresponding change slope ranges that have been adjusted, so that actual torque of the engine and an actual rotational-speed of the generator change gently to respective targets thereof; and
a second control module configured to, when the driving mode of the hybrid power system is a parallel mode, determine a torque change slope range of a driving motor according to a driving demand torque change determined by the driving wheel end demand torque, and control torque of the driving motor to change according to a corresponding change slope range that has been adjusted, so that actual torque of the driving motor changes gently to a target thereof.

12. The torque control apparatus for a hybrid power system according to claim 11, **characterized in that**, when the driving mode of the hybrid power system is the parallel mode, the second control module is further configured to:

determine instant target torque of the driving motor; and
determine instant target torque of the engine according to the instant target torque of the driving motor and the driving wheel end demand torque so as to achieve gentle change control over the torque of the engine.

13. The torque control apparatus for a hybrid power system according to claim 11 or 12, **characterized in that**, when the driving mode of the hybrid power system is the parallel mode, the second control module is further configured to: when the actual torque of the engine is less than target torque of the engine that is determined based on the driving wheel end demand torque, compensate for a difference between the target torque of the engine and the actual torque of the engine by means of the generator.

14. The torque control apparatus for a hybrid power system according to claim 11, **characterized in that** the first control module comprises:

a driving demand power determination unit configured to determine driving demand power in a current period according to driving wheel end demand torque collected in the current period;

a power difference determination unit configured to calculate a power difference between the driving demand power in the current period and driving demand power in a previous period;

a driving demand power change accumulated value determination unit configured to obtain a driving demand power change accumulated value in the current period based on the power difference and a driving demand power change accumulated value calculated in the previous period;

a torque and rotational-speed change slope determination unit configured to determine, according to the driving demand power change accumulated value in the current period, the torque change slope range of the engine and the rotational-speed change slope range of the generator based on the driving demand power change;

an engine torque change slope range determination unit configured to add the torque change slope range of the engine based on the driving demand power change and a base torque change slope range of the engine in the series mode that is determined according to preset logic to obtain the torque change slope range of the engine that is demanded in the series mode; and

a generator speed change slope range determination unit configured to add the rotational-speed change slope range of the generator based on the driving demand power change and a base rotational-speed change slope range of the generator in the series mode that is determined according to preset logic to obtain the rotational-speed change slope range of the generator that is demanded in the series mode.

15. The torque control apparatus for a hybrid power system according to claim 11, **characterized in that** the second control module comprises:

a torque difference determination unit configured to calculate a torque difference between driving wheel end demand torque in a current period and driving wheel end demand torque in a previous period;

a driving demand torque change accumulated value determination unit configured to obtain a driving demand torque change accumulated value in the current period based on the torque difference and a driving demand torque change accumulated value calculated in the previous period;

a torque change slope range determination unit configured to determine, according to the driving demand torque change accumulated value in the current period and a speed ratio of driving motor to wheel end, the torque change slope range of the driving motor based on the driving demand torque change; and

a driving motor torque change slope range determination unit configured to add the torque change slope range of the driving motor based on the driving demand torque change and a base torque change slope range of the driving motor in the parallel mode that is determined according to preset logic to obtain the torque change slope range of the driving motor that is demanded in the parallel mode.

16. A vehicle, **characterized by** comprising the torque control apparatus for a hybrid power system according to any one of claims 11 to 15.

17. A control device, **characterized by** comprising a processor, a memory, and a program or instructions stored in the memory and executable by the processor, wherein the program or the instructions, when executed by the processor, cause the steps of the torque control method for a hybrid power system according to any one of claims 1 to 10 to be implemented.

18. A readable storage medium, **characterized in that** the readable storage medium has a program or instructions stored therein, and the program or the instructions, when executed by a processor, cause the steps of the torque control method for a hybrid power system according to any one of claims 1 to 10 to be implemented.

EP 4 631 809 A1

—— Mechanical connection

— — Electrical connection

Engine

Power battery

Generator

Front wheel

Clutch

Rear wheel

Motor

FIG. 1

19

Driving demand torque

Target torque of motor

Original target torque of engine

Instant target torque of engine

Original target speed of generator

Instant target speed of generator

FIG. 2

Power difference=driving demand power at a time instance k - driving demand power at a time instance (k-1)

Power difference>0

No

Yes

Calculate: driving demand power positive change original accumulated value at a time instance k= driving demand power positive change accumulated value at a time instance (k-1)+ driving demand power at a time instance k - driving demand power at a time instance (k-1) + first preset attenuation factor

Calculate: driving demand power positive change original accumulated value at a time instance k= driving demand power positive change accumulated value at a time instance (k-1) + fourth preset attenuation factor

Calculate: driving demand power positive change accumulated value at a time instance k= Max (driving demand power positive change original accumulated value at a time instance k, 0)

FIG. 3-1

Power difference=driving demand power at a time instance k - driving demand power at a time instance (k-1)

Power difference＞0 — Yes

No

Calculate: driving demand power negative change original accumulated value at a time instance k= driving demand power negative change accumulated value at a time instance (k-1)+ driving demand power at a time instance k - driving demand power at a time instance (k-1) + third preset attenuation factor

Calculate: driving demand power negative change original accumulated value at a time instance k= driving demand power negative change accumulated value at a time instance (k-1) + first preset attenuation factor

Calculate: driving demand power negative change accumulated value at a time instance k=Min(driving demand power negative change original accumulated value at a time instance k, 0)

FIG. 3-2

Driving demand torque

Original target torque of motor

Instant target torque of motor

Target torque of engine

Actual torque of engine

Instant target torque of generator

FIG. 4

EP 4 631 809 A1

Torque difference=driving wheel end demand torque at a time instance k - driving wheel end demand torque at a time instance (k-1)

Torque difference＞0 — No

Yes

Calculate: driving wheel end demand torque positive change original accumulated value at a time instance k= driving wheel end demand torque positive change accumulated value at a time instance (k-1) + driving wheel end demand torque at a time instance k - driving wheel end demand torque at a time instance (k-1) + fifth preset attenuation factor

Calculate: driving wheel end demand torque positive change original accumulated value at a time instance k= driving wheel end demand torque positive change accumulated value at a time instance (k-1) + eighth preset attenuation factor

Calculate: driving wheel end demand torque positive change accumulated value at a time instance k= Max(driving wheel end demand torque positive change original accumulated value at a time instance k, 0)

FIG. 5-1

Torque difference=driving wheel end demand torque at a time instance k - driving wheel end demand torque at a time instance (k-1)

Torque difference＞0 — Yes

No

Calculate: driving wheel end demand torque negative change original accumulated value at a time instance k= driving wheel end demand torque negative change accumulated value at a time instance (k-1) + driving wheel end demand torque at a time instance k - driving wheel end demand torque at a time instance (k-1) + seventh preset attenuation factor

Calculate: driving wheel end demand torque negative change original accumulated value at a time instance k= driving wheel end demand torque negative change accumulated value at a time instance (k-1) + sixth preset attenuation factor

Calculate: driving wheel end demand torque negative change accumulated value at a time instance k=Min(driving wheel end demand torque negative change original accumulated value at a time instance k, 0)

FIG. 5-2

22

FIG. 6

## INTERNATIONAL SEARCH REPORT

| International application No. |
| --- |
| **PCT/CN2024/076051** |

| A. | CLASSIFICATION OF SUBJECT MATTER |
| --- | --- |

B60W20/10(2016.01)i; B60W20/15(2016.01)i; B60W20/20(2016.01)i; B60W10/06(2006.01)i; B60W10/08(2006.01)i

According to International Patent Classification (IPC) or to both national classification and IPC

| B. | FIELDS SEARCHED |
| --- | --- |

Minimum documentation searched (classification system followed by classification symbols)

IPC: B60W

Documentation searched other than minimum documentation to the extent that such documents are included in the fields searched

Electronic data base consulted during the international search (name of data base and, where practicable, search terms used)

CNTXT, ENTXTC, DWPI, CNKI: 混合动力, 并联, 串联, 扭矩, 转矩, 转速, 平缓, 平稳, 斜率, hybrid, serial, series, parallel, smooth, slop

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116674522 A (CHONGQING CHANG'AN AUTOMOBILE CO., LTD.) 01 September 2023 (2023-09-01) <br> claims 1-18 | 1-18 |
| A | CN 104029675 A (SAIC MOTOR CORP., LTD.) 10 September 2014 (2014-09-10) <br> description, pages 3-4, and figures 1-7 | 1-18 |
| A | DE 202015104645 U1 (BORGWARD TRADEMARK HOLDINGS GMBH) 22 March 2016 (2016-03-22) <br> entire document | 1-18 |
| A | CN 114987435 A (CHINA FAW CO., LTD.) 02 September 2022 (2022-09-02) <br> entire document | 1-18 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 May 2024** | **02 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/076051**

| Patent document cited in search report | | | Publication date (day/month/year) | Patent family member(s) | | | Publication date (day/month/year) |
|---|---|---|---|---|---|---|---|
| CN | 116674522 | A | 01 September 2023 | None | | | |
| CN | 104029675 | A | 10 September 2014 | WO | 2014135030 | A1 | 12 September 2014 |
| | | | | ES | 2881078 | T3 | 26 November 2021 |
| | | | | US | 2016009269 | A1 | 14 January 2016 |
| | | | | US | 9604630 | B2 | 28 March 2017 |
| | | | | EP | 2965963 | A1 | 13 January 2016 |
| | | | | EP | 2965963 | A4 | 09 November 2016 |
| | | | | EP | 2965963 | B1 | 05 May 2021 |
| DE | 202015104645 | U1 | 22 March 2016 | None | | | |
| CN | 114987435 | A | 02 September 2022 | None | | | |

Form PCT/ISA/210 (patent family annex) (July 2022)